# EUROPEAN PATENT APPLICATION

(11) **EP 4 819 487 A1**
(43) Date of publication of application: **07.10.2026**
(21) Application number: 24924077.1
(22) Date of filing: 28.06.2024
(51) Int. Cl.: H02S 50/00

(54) **METHOD AND DEVICE FOR DISPLAYING MONITORING DATA OF SOLAR MODULE**

(30) Priority: 07.02.2024 KR 20240018553; 07.02.2024 KR 20240018554
(71) Applicant: Hanwha Solutions Corporation, Jung-gu Seoul 04541 (KR)
(72) Inventor: BAEK, Eun Je, Seoul 04541 (KR); MYUNG, Soo Hyun, Seoul 04541 (KR)
(74) Representative: Mooser, Sebastian Thomas
(86) International application number: PCT/KR2024/009104
(87) International publication number: WO 2025/170114

(57) **Abstract**

Provided are a method and apparatus for displaying monitoring data regarding a photovoltaic module to easily monitor an event occurring in a photovoltaic module and easily compare monitoring information regarding two or more photovoltaic modules.

## Description

### Technical Field

The disclosure relates to a method and apparatus for displaying monitoring data regarding a photovoltaic module through an event marker or a multi-selection.

### Background Art

Recently, as interest in eco-friendly energy technologies has increased, the installation of solar photovoltaic systems for generating energy by using sunlight has increased. Solar photovoltaic systems are systems that collect solar energy through photovoltaic modules and produce electricity, and the electricity produced in this way is supplied to power grids of houses and supplied as household electricity or stored in batteries and used. Producing electricity through solar photovoltaic systems may be environmentally friendly, may reduce electricity bills in the long run, and thus has recently been in the spotlight.

In general, solar photovoltaic systems have installed therein a plurality of photovoltaic modules including solar cells that produce electricity by using sunlight and have connected thereto inverters that convert energy generated by the photovoltaic modules to supply the converted energy to loads.

In the case where events occur in the inverters, users or managers may identify the events through error codes displayed on the inverters. However, in the case where events occur in the photovoltaic modules, there are no methods for the users or managers to identify the events, and thus, inconvenience may be present. In addition, there is a need to develop a method for a user or a manager to identify a photovoltaic module in which an event occurs, from among a plurality of photovoltaic modules, an event that occurs, and a certain point in time at which an event occurs.

Meanwhile, a manager who installs and manages photovoltaic modules provides an after-sales service to monitor the photovoltaic modules after installation and maximize a maximum power generation amount of each photovoltaic module, and to this end, there is the inconvenience of needing to identify monitoring information regarding respective photovoltaic modules individually. Therefore, there is a need to develop a method of easily identifying and comparing information regarding two or more photovoltaic modules.

### Detailed Description of the Invention

### Technical Problem

Provided are a method and apparatus for easily monitoring an event occurring in a photovoltaic module by displaying monitoring data regarding the photovoltaic module through an event marker.

Provided is a method of intuitively identifying a type and occurrence time of event that occurs in a particular photovoltaic module from among a plurality of photovoltaic modules.

Provided are a method and apparatus for easily comparing monitoring information regarding at least two photovoltaic modules by displaying monitoring data regarding the at least two photovoltaic modules by a multi-selection.

Provided is a method of intuitively identifying a particular photovoltaic module that needs to be managed from among a plurality of multi-selected photovoltaic modules.

### Technical Solution to Problem

According to an aspect of the disclosure, a method of displaying monitoring data regarding a photovoltaic module on a monitoring apparatus including a processor and configured to communicate with the photovoltaic module includes receiving monitoring data from a photovoltaic module array including a plurality of photovoltaic modules and storing the received monitoring data, on the basis of the stored monitoring data, generating a timeline interface displaying comprehensive monitoring information regarding the photovoltaic module array over time and a photovoltaic module array layout drawing including a plurality of photovoltaic module icons displaying monitoring information by respectively corresponding to the photovoltaic modules, synchronously with a time of the timeline interface and outputting the generated timeline interface and photovoltaic module array layout drawing to a user terminal, determining, on the basis of the stored monitoring data, whether or not an event occurs in each of the photovoltaic modules, in a case where the event occurs as a result of the determination, displaying, on the photovoltaic module array layout drawing, a photovoltaic module icon corresponding to a photovoltaic module in which the event occurs in a method of being distinguished from the other photovoltaic module icons, and displaying an event marker on the timeline interface by synchronizing with displaying the photovoltaic module icon associated with the event in the distinguished method.

Whether or not the event occurs may be determined on the basis of a maximum power generation amount of the photovoltaic module for a certain time.

The photovoltaic module icon corresponding to the photovoltaic module in which the event occurs may be displayed by using at least one of different color, brightness, darkness, and border line expression methods from the other photovoltaic module icons.

The event marker may be displayed from a point in time at which the event occurs to a point in time at which the event is terminated.

The determining of whether or not the event occurs may further include determining a type of event, and the event marker may be distinguishably displayed according to different types of events.

The photovoltaic module array layout drawing may correspond to a layout of an actually installed photovoltaic module array.

According to another aspect of the disclosure, an apparatus includes at least one processor and at least one memory, wherein the at least one processor is configured to receive monitoring data from a photovoltaic module array including a plurality of photovoltaic modules and store the received monitoring data in the at least one memory, on the basis of the stored monitoring data, generate a timeline interface displaying comprehensive monitoring information regarding the photovoltaic module array over time and a photovoltaic module array layout drawing including a plurality of photovoltaic module icons displaying monitoring information by respectively corresponding to the photovoltaic modules, synchronously with a time of the timeline interface and output the generated timeline interface and photovoltaic module array layout drawing to a user terminal, determine, on the basis of the stored monitoring data, whether or not an event occurs in each of the photovoltaic modules, in a case where the event occurs as a result of the determination, display, on the photovoltaic module array layout drawing, a photovoltaic module icon corresponding to a photovoltaic module in which the event occurs in a method of being distinguished from the other photovoltaic module icons, and display an event marker on the timeline interface by synchronizing with displaying the photovoltaic module icon associated with the event in the distinguished method.

According to another aspect of the disclosure, a method of displaying monitoring data regarding a photovoltaic module on a monitoring apparatus including a processor and configured to communicate with the photovoltaic module includes receiving monitoring data from a photovoltaic module array including a plurality of photovoltaic modules and storing the received monitoring data, on the basis of the stored monitoring data, generating a photovoltaic module array layout drawing including a plurality of photovoltaic module icons displaying monitoring information over time by respectively corresponding to the photovoltaic modules and outputting the generated photovoltaic module array layout drawing to a user terminal, receiving, as an input, a multi-selection selecting at least two photovoltaic modules according to a command from a user on the photovoltaic module array layout drawing, and generating and displaying a multi-selection interface that compares and displays monitoring information regarding at least two photovoltaic modules selected by the input multi-selection.

The input of the multi-selection may be performed by a method of selecting at least two photovoltaic module icons through a drag operation or a method of selecting at least two photovoltaic module icons together with a function key.

The multi-selection interface may overlap and display respective graphs displaying power generation amounts of the photovoltaic modules over time.

The method may further include generating a reference value on the basis of the monitoring information regarding the selected at least two photovoltaic modules, selecting, as a module of interest, a photovoltaic module needing to be managed from among the selected at least two photovoltaic modules, on the basis of the reference value, and displaying the photovoltaic module selected as the module of interest in a method of being distinguished from the other photovoltaic modules on the photovoltaic array layout drawing.

A photovoltaic module icon corresponding to the photovoltaic module selected as the module of interest may be displayed to be distinguished from other photovoltaic module icons on the photovoltaic module array layout drawing.

The photovoltaic module array layout drawing may correspond to a layout of an actually installed photovoltaic module array.

According to another aspect of the disclosure, an apparatus includes at least one processor and at least one memory, wherein the at least one processor 120 is configured to receive monitoring data from a photovoltaic module array including a plurality of photovoltaic modules and store the received monitoring data in the at least one memory, on the basis of the stored monitoring data, generate a photovoltaic module array layout drawing including a plurality of photovoltaic module icons displaying monitoring information over time by respectively corresponding to the photovoltaic modules and output the generated photovoltaic module array layout drawing to a user terminal, receive, as an input, a multi-selection selecting at least two photovoltaic modules according to a command from a user on the photovoltaic module array layout drawing, and generate and display a multi-selection interface that compares and displays monitoring information regarding at least two photovoltaic modules selected by the input multi-selection.

According to another aspect of the disclosure, a computer-readable recording medium may include a recording medium having recorded thereon a program for causing a computer to execute the above-described method.

### Advantageous Effects

According to an embodiment, in the case where an event occurs in a photovoltaic module, the event may be easily monitored.

According to an embodiment, from among a plurality of photovoltaic modules, a photovoltaic module in which an event occurs may be identified, and an overall event history, including a type and occurrence time of event, may be intuitively identified through an event marker.

In addition, according to an embodiment, particular information regarding an event that occurs in a photovoltaic module may be provided to quickly and appropriately cope with the event.

Meanwhile, according to an embodiment, an additional operation for resolving an event occurring in a photovoltaic module may be automatically connected to increase convenience of use.

According to an embodiment, monitoring information regarding at least two photovoltaic modules may be easily compared by a multi-selection.

According to an embodiment, a particular photovoltaic module that needs to be managed may be intuitively identified from among a plurality of multi-selected photovoltaic modules.

In addition, according to an embodiment, an installer or a manager may identify a particular photovoltaic module of which installation location or degree of tilt and azimuth need to be adjusted, quickly and appropriately cope with the same, and help improve service quality.

### Brief Description of Drawings

FIG. 1 is a block diagram illustrating an embodiment of an apparatus for displaying monitoring data regarding a photovoltaic module;
FIG. 2 is a block diagram illustrating a relationship between a monitoring apparatus and a photovoltaic module array, according to an embodiment;
FIG. 3 is a flowchart illustrating a method of displaying monitoring data regarding a photovoltaic module, according to an embodiment;
FIGS. 4A and 4B illustrate examples of a screen on which an event marker is displayed on a timeline interface;
FIGS. 5A and 5B illustrate examples of a screen on which an event marker is displayed on a timeline interface, according to an embodiment;
FIGS. 6A, 6B, 7A, and 7B illustrate examples of a screen on which an event interface is displayed through an event marker;
FIGS. 8A and 8B illustrate examples of a screen on which an additional operation is performed on an event interface;
FIG. 9 is a flowchart illustrating a method of displaying monitoring data regarding a photovoltaic module, according to an embodiment;
FIGS. 10A and 10B illustrate examples of a screen that displays a single selection interface by a single selection;
FIGS. 11A and 11B illustrate examples of a screen that displays a multi-selection interface by a multi-selection;
FIG. 12 is a flowchart illustrating a method of displaying monitoring data regarding a photovoltaic module, according to an embodiment;
FIGS. 13A and 13B illustrate examples of a screen that displays a module of interest selected by a multi-selection, according to an embodiment; and
FIGS. 14A and 14B illustrate other examples of a screen that displays a module of interest selected by a multi-selection, according to an embodiment.

### Best Mode

According to an aspect of the disclosure, a method of displaying monitoring data regarding a photovoltaic module on a monitoring apparatus including a processor and configured to communicate with the photovoltaic module includes receiving monitoring data from a photovoltaic module array including a plurality of photovoltaic modules and storing the received monitoring data, on the basis of the stored monitoring data, generating a timeline interface displaying comprehensive monitoring information regarding the photovoltaic module array over time and a photovoltaic module array layout drawing including a plurality of photovoltaic module icons displaying monitoring information by respectively corresponding to the photovoltaic modules, synchronously with a time of the timeline interface and outputting the generated timeline interface and photovoltaic module array layout drawing to a user terminal, determining, on the basis of the stored monitoring data, whether or not an event occurs in each of the photovoltaic modules, in a case where the event occurs as a result of the determination, displaying, on the photovoltaic module array layout drawing, a photovoltaic module icon corresponding to a photovoltaic module in which the event occurs in a method of being distinguished from the other photovoltaic module icons, and displaying an event marker on the timeline interface by synchronizing with displaying the photovoltaic module icon associated with the event in the distinguished method.

### Mode of Disclosure

Advantages and features of the disclosure, and methods of achieving the same will become clear with reference to the detailed description of embodiments taken in conjunction with the accompanying drawings. However, it should be understood that the disclosure is not limited to embodiments presented below, but may be implemented in various different forms, and includes all modifications, equivalents, and alternatives included in the spirit and scope of the disclosure. The embodiments presented below are provided to complete the disclosure and to fully inform one of ordinary skill in the art to which the disclosure belongs. When describing the disclosure, the detailed description of related known arts, which may obscure the subject matter of the disclosure, will be omitted.

Terms used herein are only used to describe particular embodiments, and are not intended to limit the disclosure. The wordings such as "in some embodiments" or "in an embodiment" appearing in various places do not necessarily refer to all the same embodiments. The singular forms are intended to include the plural forms as well, unless the context clearly indicates otherwise. It will be further understood that the terms "comprises," "comprising," "have," and/or "having," when used herein, specify the presence of stated features, integers, steps, operations, elements, components, and/or combinations thereof, but do not preclude the presence or addition of one or more other features, integers, steps, operations, elements, components, and/or combinations thereof.

In addition, connection lines or connection members between components shown in the drawings are only examples of functional connections and/or physical or circuit connections. In an actual apparatus, connections between components may be represented by various functional connections, physical connections, or circuit connections that may be replaced or added.

The present embodiments may be modified in various ways and may have various forms, and thus, particular embodiments will be illustrated in the drawings and described in detail in the description. However, this is not intended to limit the present embodiments to a particular disclosure form, and should be understood to include all changes, equivalents, and alternatives included in the spirit and scope of the present embodiments. Terms used herein are only used to describe embodiments, and are not intended to limit the present embodiments.

Unless otherwise defined, the terms used in the present embodiments have the same meaning as generally understood by one of ordinary skill in the art to which the present embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The detailed description of the disclosure below refers to the accompanying drawings that illustrate, as an example, a particular embodiment in which the disclosure may be implemented. This embodiment will be described in detail enough for one of ordinary skill in the art to implement the disclosure. It should be understood that various embodiments are different from one another but are not necessarily mutually exclusive. For example, particular shapes, structures, and characteristics described herein may be changed and implemented from one embodiment to another without departing from the spirit and scope of the disclosure. In addition, it should be understood that locations or arrangements of individual components within each embodiment may also be changed without departing from the spirit and scope of the disclosure. Accordingly, the detailed description below is not intended to be limited, and the scope of the disclosure should be taken to encompass the scope claimed by claims and all equivalents thereto. Like reference numbers in the drawings indicate identical or similar elements throughout various aspects.

Hereinafter, various embodiments will be described in detail with reference to the attached drawings in order to enable one of ordinary skill in the art to easily implement the disclosure.

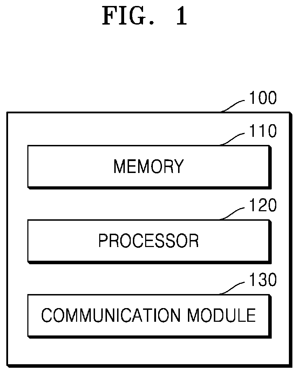

FIG. 1 is a block diagram illustrating an embodiment of an apparatus for displaying monitoring data regarding a photovoltaic module.

Referring to FIG. 1, an apparatus 100 for displaying monitoring data regarding a photovoltaic module (hereinafter, referred to as a monitoring apparatus) may include a memory 110, a processor 120, and a communication module 130.

Although FIG. 1 illustrates that the monitoring apparatus 100 includes only components related to the present embodiments, it is obvious to one of ordinary skill in the art that other general-purpose components may be further included in addition to the components illustrated in FIG. 1.

For example, the monitoring apparatus 100 may be implemented as various types of devices such as a mobile device including a notebook PC, a desktop PC, a laptop, a tablet computer, and a smartphone, a server device, and an embedded device. As a detailed example, the monitoring apparatus 100 may correspond to a smartphone, a tablet device, an augmented reality (AR) device, an Internet of Things (IoT) device, an autonomous vehicle, or the like that performs voice recognition, image recognition, image classification, and the like by using artificial intelligence, but is not limited thereto. In addition, the monitoring apparatus 100 may include a dedicated hardware (HW) accelerator mounted on a device as described above, and the monitoring apparatus 100 may include a HW accelerator such as a neural processing unit (NPU), a tensor processing unit (TPU), or a neural engine, which is a dedicated module for driving artificial intelligence, but is not limited thereto.

The memory 110 may be hardware that stores various types of data processed within the monitoring apparatus 100 and may include a computer-readable recording medium. For example, the memory 110 may store data processed by the monitoring apparatus 100 and data to be processed by the monitoring apparatus 100. Also, the memory 110 may store applications, drivers, and the like to be driven by the monitoring apparatus 100. The memory 110 may include at least one of a volatile memory and a nonvolatile memory. The volatile memory may include dynamic random access memory (DRAM), static random access memory (SRAM), synchronous dynamic random access memory (SDRAM), phase-change random access memory (PRAM), magnetic random access memory (MRAM), and resistive random access memory (RRAM), ferroelectric random access memory (FeRAM), and the like. The nonvolatile memory may include read-only memory (ROM), programmable read-only memory (PROM), electrically programmable read-only memory (EPROM), and electrically erasable programmable read-only memory (EEPROM), and the like.

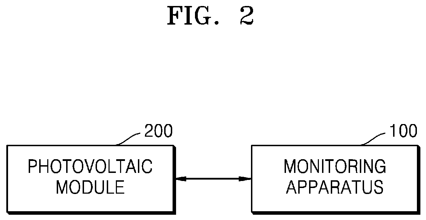

In an embodiment, the memory 110 may include magnetic memory, CD-ROM, Blu-ray or other optical disk storages, a hard disk drive (HDD), a solid state drive (SSD), compact flash (CF), secure digital (SD), micro secure digital (Micro-SD), mini secure digital (Mini-SD), extreme digital (xD), or a memory stick, but is not limited thereto. In addition, the memory 110 may store an operating system and at least one program code (code to be performed by the processor 120 operating with reference to FIGS. 2 to 14B).

Referring to FIGS. 2 to 14B, the processor 120 may control overall functions for executing the monitoring apparatus 10. For example, by executing software (e.g., a program) stored in the memory 110 within the monitoring apparatus 100, the processor 120 may control at least one other component (e.g., a hardware or software component) of an electronic device connected to the processor 120 and may overall control the monitoring apparatus 100 by performing various types of data processing or computations.

Referring to FIGS. 2 to 8B, the processor 120 may receive, for example, monitoring data from a photovoltaic module array and store the received monitoring data in the memory 110. In addition, the processor 120 may generate, on the basis of the stored monitoring data, a timeline interface that displays a comprehensive monitoring value of the photovoltaic module array over time. In addition, the processor 120 may generate a photovoltaic module array layout drawing that synchronously with a time of the timeline interface, displays a monitoring value on a photovoltaic module icon corresponding to each individual photovoltaic module. The processor 120 may output, to a terminal of a user, the result of adjacently arranging the generated timeline interface and photovoltaic module array layout drawing so that the generated timeline interface and photovoltaic module array layout drawing appear on one screen.

Meanwhile, the processor 120 may determine, at certain time intervals on the basis of the stored monitoring data, whether or not an event occurs in each individual photovoltaic module. In the case where the event occurs as the result of the determination, the processor 120 may display, on the photovoltaic module array layout drawing, a photovoltaic module icon corresponding to an individual photovoltaic module in which the event occurs, in a method of being distinguished from other photovoltaic module icons from a point in time at which the event occurs to a point in time at which the event is resolved. In addition, the processor 120 may generate and display an event marker on the timeline interface by synchronizing with displaying, in the distinguished method, the individual photovoltaic module icon associated with the event.

Meanwhile, the processor 120 may determine a type of event together with whether or not the event occurs in the individual photovoltaic module. Here, the processor 120 may differently display a color, shape, and identifier of the event marker according to different types of events. The event marker may be displayed continuously from a time when the event occurs to a time when the event is resolved.

Meanwhile, the processor 120 may generate and display an event interface including event information corresponding to the event marker, according to a selection from the user. Here, the event information may include a type of event, code, an event start time, an event termination time, identification information of a target in which an event occurs, and a response guidance or trouble shooting related to the event, and the processor 120 may perform, on the event interface, an additional operation linked to the response guidance or trouble shooting, according to a command from the user.

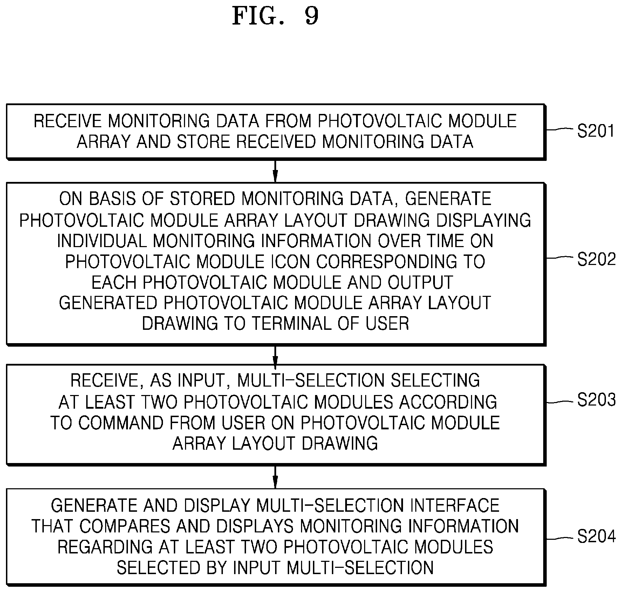

Referring to FIGS. 9 to 14B, the processor 120 may receive, for example, monitoring data from a photovoltaic module array and store the monitoring data in the memory 110. In addition, the processor 120 may generate, on the basis of the stored monitoring data, a photovoltaic module array layout drawing that displays a monitoring value on a photovoltaic module icon corresponding to each individual photovoltaic module. The processor 120 may output the generated photovoltaic module array layout drawing to the terminal of the user.

Meanwhile, the processor 120 may receive, as an input, a multi-selection for selecting at least two photovoltaic modules according to a command from the user on the photovoltaic module array layout drawing, and may generate and display a multi-selection interface for comparing and displaying monitoring information regarding the at least two photovoltaic modules selected by the input multi-selection. In addition, the processor 120 may display the multi-selection interface by overlapping respective graphs displaying power generation amounts of the photovoltaic modules over time.

Meanwhile, the processor 120 may generate a reference value on the basis of monitoring information regarding at least two photovoltaic modules selected on the multi-selection interface and on the basis of the generated reference value, may select, as a module of interest, a photovoltaic module that needs to be managed from among the at least two selected photovoltaic modules. In addition, the processor 120 may display, on the photovoltaic module array layout drawing, the photovoltaic module selected as the module of interest in a method of being distinguished from other photovoltaic modules. In addition, the processor 120 may display, on the photovoltaic module array layout drawing, a photovoltaic module icon corresponding to the photovoltaic module selected as the module of interest to be distinguished from other photovoltaic module icons.

According to an embodiment, the processor 120 may be implemented as a central processing unit (CPU), a graphics processing unit (GPU), an application processor (AP), a neural processing unit (NPU), an image signal processor (ISP), a sensor hub processor, a communication processor (CP), or the like, which is provided within the monitoring apparatus 100, but is not limited thereto.

Meanwhile, the communication module 130 may provide an interface through which the monitoring apparatus 100 may be connected to a photovoltaic module, a user terminal, or a server through a network to transmit and receive data. The network may refer to a connection structure in which information may be exchanged between respective nodes, may be representatively Wi-Fi, but is not limited thereto, and may use at least one of a wired or wireless local area network (LAN), ZigBee, Bluetooth, and near field communication.

FIG. 2 is a block diagram illustrating a relationship between a monitoring apparatus and a photovoltaic module array, according to an embodiment.

A solar photovoltaic system according to an embodiment may refer to a power generation system that converts solar energy into electrical energy. The solar photovoltaic system may include a plurality of photovoltaic (PV) modules 200. The solar photovoltaic system may further include an inverter that converts energy generated by the photovoltaic module 200, a battery that stores the energy generated by the photovoltaic module 200, or the like.

The photovoltaic module 200 may be a module that generates power by using a photoelectric effect, and a plurality of photovoltaic modules 200 may be connected to one another to constitute a photovoltaic module array. The photovoltaic module array may have a form in which a plurality of photovoltaic modules 200 are connected in series or in parallel.

In an embodiment, each photovoltaic module 200 may include a microprocessor (not shown) attached to or connected to the photovoltaic module 200 to control or monitor the photovoltaic module 200 and may be referred to as a smart module. The microprocessor may include a communication module capable of transmitting monitored information to the monitoring apparatus 100.

An existing photovoltaic module may not include a microprocessor as described above, and thus, an event occurring in the existing photovoltaic module or monitoring information regarding the existing photovoltaic module may not be identified. Previously, to monitor a case where an event occurs in a photovoltaic module or the photovoltaic module, a user or a manager needs to identify or monitor the event by indirectly inferring or indirectly monitoring the event occurring in the photovoltaic module through an inverter connected to the photovoltaic module or directly identifying the photovoltaic module through a site visit, a drone, or the like. However, a smart module according to an embodiment may include a microprocessor and communicate with the monitoring apparatus 100 to transmit monitoring data, and thus, the user or the manager may easily identify an event occurring in the smart module even from a long distance.

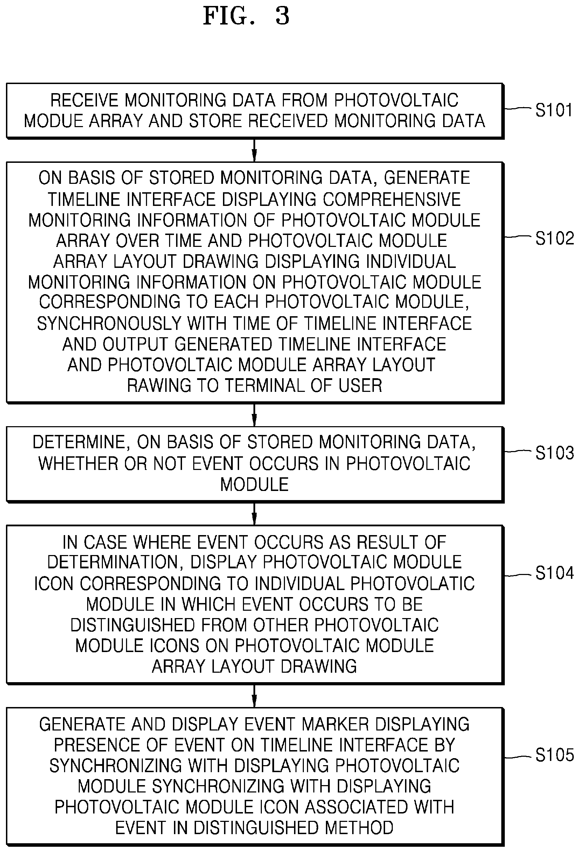

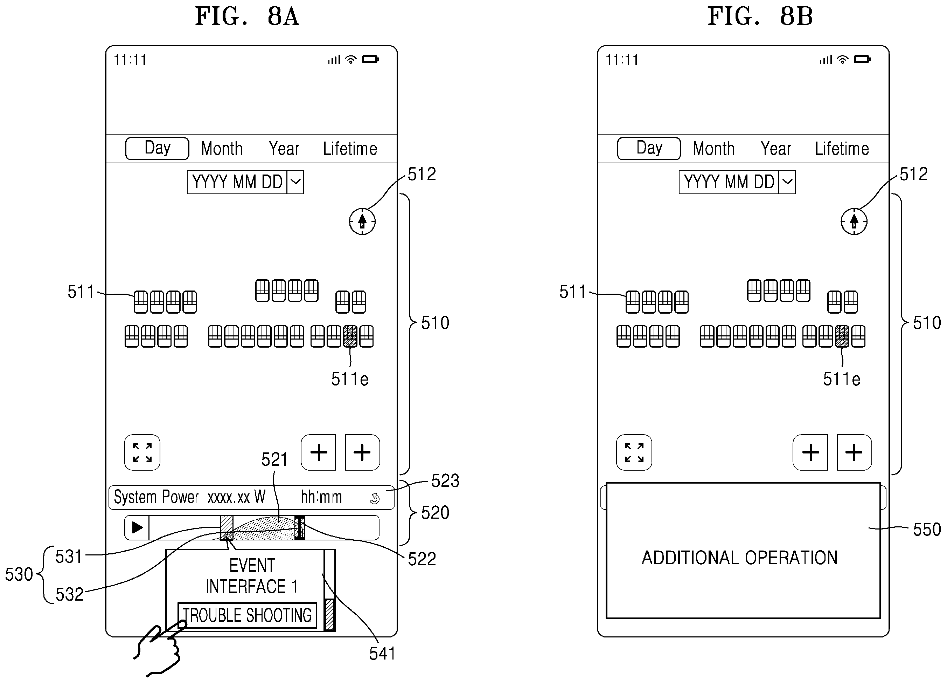

The present embodiments describe, as an example, a solar photovoltaic system including at least one photovoltaic module array including photovoltaic modules 200 to which a smart module is applied. Hereinafter, a method of displaying monitoring data regarding a photovoltaic module through an event marker is described below with reference to FIGS. 3 to 8B, and a method of displaying monitoring data regarding a photovoltaic module by a multi-selection is described below with reference to FIGS. 9 to 14B.

FIG. 3 is a flowchart illustrating a method of displaying monitoring data regarding a photovoltaic module, according to an embodiment.

Referring to FIG. 3, in operation S101, the processor 120 may receive monitoring data from a photovoltaic module array and store the received monitoring data.

The photovoltaic module array may include a plurality of photovoltaic modules, and here, each of the photovoltaic modules may refer to a smart module including a microprocessor that may collect monitoring data regarding the photovoltaic module and transmit the collected monitoring data to a monitoring apparatus.

The monitoring data may include monitoring information regarding an individual photovoltaic module, and here, the monitoring information may include identification information, installation information, power generation amount, temperature, current, voltage, and the like of the photovoltaic module. The identification information of the photovoltaic module may be a serial number that is set when a product is manufactured and shipped and may include a combination of letters, numbers, symbols, and the like. The installation information may be the degree of tilt and azimuth determined when installing the photovoltaic module and may be displayed as an angle. The power generation amount may be an amount of electricity produced by the photovoltaic module for a certain time, determined by using, as factors, an amount of insolation, an area of the photovoltaic module, and efficiency and time of the photovoltaic module, and expressed in watts (W), kilowatts (kW), kilowatt hours (kWh), or the like.

The processor 120 may receive monitoring data from each of a plurality of photovoltaic modules included in the photovoltaic module array or may collect data from the plurality of photovoltaic modules and receive the data all at once.

The processor 120 may receive monitoring data every unit time of regular intervals (e.g., every 5 minutes, every 10 minutes, every 15 minutes, every 30 minutes, or the like). According to a selective embodiment, the processor 120 may adjust a unit time at which the monitoring data is received, on the basis of the amount of insolation. For example, a unit time during the night may have a longer interval than a unit time during the day, and a unit time on a cloudy day may have a longer interval than a unit time on a clear day. More accurate monitoring information (particularly, in terms of a power generation amount, temperature, current, and voltage) may be obtained by adjusting a unit time length as described above.

In operation S102, the processor 120 may generate, on the basis of the stored monitoring data, a timeline interface that displays a comprehensive monitoring value that is comprehensive monitoring information of the photovoltaic module array over time and a photovoltaic module array layout drawing that synchronously with a time of the timeline interface, displays an individual monitoring value, which is individual monitoring information, on a photovoltaic module icon corresponding to each individual photovoltaic module.

The timeline interface may be a user interactive interface on which comprehensive monitoring information of the photovoltaic module array over time is displayed. The comprehensive monitoring value may be a summed amount of power generation, currents, voltages, and the like of a plurality of photovoltaic modules. The comprehensive monitoring value may be represented as a graph having time as an x axis. The timeline interface may include a selection bar that may be moved to the left or right of the x-axis along the time axis, and the selection bar may be moved by an input from a user.

The photovoltaic module array layout drawing may include a plurality of imaged photovoltaic module icons, and monitoring information may be displayed on each photovoltaic module icon. The number and arrangement of photovoltaic module icons may match the number and arrangement structure of photovoltaic modules included in an actually installed photovoltaic module array. In addition, the photovoltaic module array layout drawing may include an azimuth table or an azimuth identifier indicating azimuth information. Accordingly, the manager may intuitively identify a photovoltaic module in which an event occurs and may easily repair the photovoltaic module. Photovoltaic modules may be mainly installed on a roof, a shape of a roof may vary from house to house, and a position of a shadow may vary according to a surrounding situation. Therefore, photovoltaic modules may be installed differently on respective houses, and thus, the processor 120 may generate the same photovoltaic module array layout drawing as the arrangement of actually installed photovoltaic modules to allow the manager to provide a service accurately and easily.

The processor 120 may display an individual monitoring value on a photovoltaic module icon, which is included in the photovoltaic module array layout drawing, synchronously with the time of the timeline interface. In other words, the processor 120 may display a monitoring value of each individual photovoltaic module corresponding to a time when the selection bar stops on the timeline interface, on a photovoltaic module icon corresponding thereto. The individual monitoring value may be a maximum power generation amount, a maximum current, a maximum voltage, or the like of a corresponding photovoltaic module during a unit time. The individual monitoring value may be displayed as a number on a photovoltaic module icon included in the photovoltaic module array layout drawing.

The processor 120 may adjacently arrange the photovoltaic module array layout drawing and the timeline interface to be simultaneously displayed on one screen. Accordingly, the user or the manager may simultaneously and intuitively identify comprehensive monitoring information in the timeline interface and monitoring information regarding an individual photovoltaic module on the photovoltaic module array layout drawing.

The processor 120 may distinguish and display photovoltaic module icons, which are included in the photovoltaic module array layout drawing, in an expression method of being linked to monitoring values. In an embodiment, the processor 120 may control a photovoltaic module icon to be distinguishably expressed in at least one of color, brightness, darkness, and border line expression methods according to the magnitude of a power generation amount of an individual photovoltaic module. For example, a photovoltaic module icon corresponding to a photovoltaic module having a large power generation amount may be displayed in a light color, and a photovoltaic module icon corresponding to a photovoltaic module having a small power generation amount may be displayed in a dark color. Accordingly, the user or the manager may intuitively identify a power generation amount of each photovoltaic module.

A screen including the timeline interface and the photovoltaic module array layout drawing generated by the processor 120 may be output to a terminal of the user (or the manager) connected to the monitoring apparatus 100 through a network.

In operation S103, the processor 120 may determine, on the basis of the stored monitoring data, whether or not an event occurs in a photovoltaic module.

The processor 120 may determine whether or not an event occurs in each photovoltaic module. The monitoring data received by the processor 120 may include monitoring information regarding an individual photovoltaic module, and thus, the processor 120 may establish a database for each photovoltaic module and determine, on the basis of monitoring data regarding an individual photovoltaic module, whether or not an event occurs.

The event may be a concept that includes all of an abnormal situation, a bug, an error, a failure, and the like that occur in a photovoltaic module. The event may occur when a photovoltaic module is broken, damaged, or turned off, or may occur when the photovoltaic module is temporarily obscured by a foreign material.

The processor 120 may determine whether or not the event occurs, on the basis of a maximum power generation amount of the photovoltaic module for a certain time. In an embodiment, the processor 120 may determine whether or not the event occurs, on the basis of a maximum power generation amount of a single photovoltaic module for a certain time. For example, in the case where the maximum power generation amount of the single photovoltaic module for a first hour (e.g., one hour, five hours...72 hours, or the like, or a time longer than a second time and a third time) is less than or equal to a reference value (e.g., 0 kWh), the processor 120 may determine that the event occurs. In a selective embodiment, the processor 120 may determine whether or not the event occurs, on the basis of a maximum power generation amount of two or more photovoltaic modules for a certain time. For example, in the case where the maximum power generation amount of the two or more photovoltaic modules for the second time (e.g., one hour, five hours, 48 hours, or the like, or a time shorter than the first time and longer than the third time) is less than or equal to the reference value (e.g., 0 kWh), the processor 120 may determine that the event occurs. In a selective embodiment, the processor 120 may determine whether or not the event occurs, on the basis of a maximum power generation amount of more than half of photovoltaic modules included in the photovoltaic module array for a certain time. For example, in the case where the maximum power generation amount of half of the photovoltaic modules in the photovoltaic module array is less than or equal to the reference value (e.g., 0 kWh) for the third hour (e.g., one hour, 5 hours, 24 hours, or the like, or a shorter time than the second hour), the processor 120 may determine that the event occurs.

In a selective embodiment, the processor 120 may also determine whether or not the event is terminated (resolved) in each photovoltaic module. The processor 120 may determine whether or not the event is terminated (resolved) as the user or the manager receives an input for identifying that the event is terminated (resolved).

In operation S104, in the case where the event occurs as the result of the determination, the processor 120 may display, on the photovoltaic module array layout drawing, an individual photovoltaic module icon corresponding to the photovoltaic module in which the event occurs, in a method of being distinguished from other photovoltaic module icons.

The processor 120 may display the photovoltaic module icon corresponding to the photovoltaic module in which the event occurs by using at least one of different color, brightness, darkness, and border line expression methods from the other photovoltaic module icons. Accordingly, the user may intuitively identify the photovoltaic module in which the event occurs.

The processor 120 may display the photovoltaic module icon associated with the event in the distinguished method from a point in time at which the event occurs to a point in time at which the event is terminated (resolved). The timeline interface and the photovoltaic module array layout drawing may be temporally synchronized with each other, and thus, the user may identify a point in time at which an event occurs and a photovoltaic module in which the event occurs while navigating the timeline interface by moving the selection bar of the timeline interface to the left and right along the time axis.

However, the photovoltaic module array layout drawing may display information regarding a photovoltaic module at a particular point in time selected by the selection bar on the timeline interface. Therefore, to identify whether or not the event occurs, the user needs to continuously navigate the timeline interface until the photovoltaic module array layout drawing displaying the photovoltaic module icon related to the event is displayed. In other words, to identify whether or not the event occurs, the user needs to continuously navigate the timeline interface by using the selection bar until finding, on the photovoltaic module array layout drawing, the photovoltaic module icon associated with the event.

To solve the above inconvenience, the processor 120 may display an event marker on the timeline interface so that the user or the manager may easily monitor the event.

In operation S105, the processor 120 may display an event marker on the timeline interface by synchronizing with displaying, in the distinguished method, the photovoltaic module icon associated with the event in operation S104.

Here, displaying the event marker by synchronizing may be a temporal synchronization in which the event marker is displayed on the timeline interface when the processor 120 displays the photovoltaic module icon associated with the event in the distinguished method. In an embodiment, the event marker may overlap and be displayed on a graph 521 of the timeline interface from the point in time at which the event occurs to the point in time at which the event is terminated (resolved). In this case, the user may also identify, by a length of a time direction of the event marker, information regarding how long each event lasts. As an example, the point in time at which the event occurs may be a point in time at which monitoring data associated with the event first occurs when determining whether or not the event occurs. For example, in the case where the processor 120 determines that a maximum power generation amount of a single photovoltaic module is 0 during a certain time interval of 24 hours from 1:00 PM on the previous day to 1:00 PM on the next day, the processor 120 may determine that the event occurs. Here, the point in time at which the event occurs may be 1:00 PM on the previous day when monitoring data showing a first power generation amount of 0 is generated. In a selective embodiment, the point in time at which the event occurs may be a point in time at which whether or not the event occurs is determined. For example, in the above-described example, the point in time at which the event occurs may be 1:00 PM on the next day.

Meanwhile, as an example, the point in time at which the event is terminated (resolved) may be a point in time at which the user or the manager receives an input for identifying that the event is terminated (resolved).

In an embodiment, the event marker may overlap and be displayed on a graph of the timeline interface at the point in time at which the event occurs. Here, the event marker may be more simply represented, and thus, an event history may be intuitively understood.

The processor 120 may generate a separate event marker for each of a plurality of events that occur at different times and display the generated event marker at a corresponding time. The processor 120 may generate separate event markers for a plurality of events occurring at the same time, respectively, and may display the generated event markers to overlap each other at the same time.

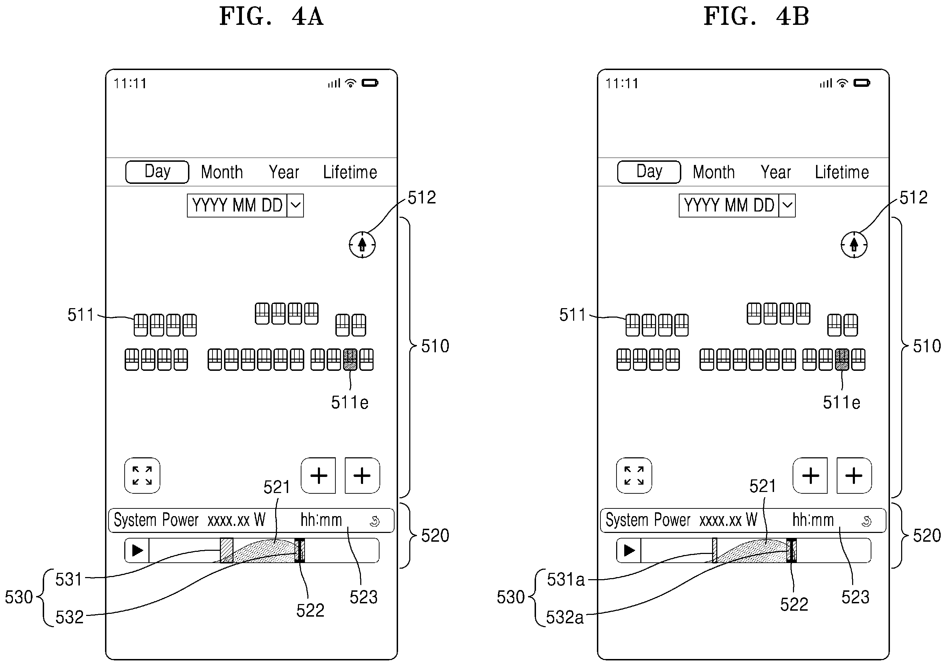

FIGS. 4A and 4B illustrate examples of a screen on which an event marker is displayed on a timeline interface. FIGS. 4A and 4B illustrate that a photovoltaic module array layout drawing 510 and a timeline interface 520 are displayed adjacent to each other on one screen. As illustrated in FIGS. 4A and 4B, the timeline interface 520 may express, as a graph 521, a comprehensive power generation amount (system power) of the photovoltaic module array over time on a particular date (YYYYMMDD), and a user may identify a comprehensive power generation amount (system power) at a time point 523 selected by moving a selection bar 522 to the left and right of the screen. An azimuth identifier 512 displaying azimuth information may be displayed on the photovoltaic module array layout drawing 510, and photovoltaic module icons 511 may be displayed to correspond to an arrangement of actual photovoltaic modules. As illustrated in FIGS. 4A and 4B, the photovoltaic module array layout drawing 510 may display a state of the photovoltaic module array at the time point 523 selected by the user. Identification numbers and individual monitoring values (maximum power generation amounts) may be displayed on the respective photovoltaic module icons 511.

Meanwhile, two event markers (e.g., a first event marker 531 and a second event marker 532) may be displayed on the timeline interface 520. The first event marker 531 and the second event marker 532 may overlap the graph 521 and be displayed, and thus, a time when an event occurs may be identified. FIG. 4B illustrates an embodiment in which the event markers 531a and 532a are displayed at a point in time at which the event occurs, and FIG. 4A illustrates an embodiment in which event markers 531 and 532 are displayed for a period from a point in time at which an event occurs to a point in time at which the event is terminated (resolved). When the selection bar 522 is located on the second event marker 532, a photovoltaic module in which an event occurs may be identified on the photovoltaic module array layout drawing 510. As illustrated in FIGS. 4A and 4B, a photovoltaic module icon indicated by 511e may be displayed in a color distinguished from the other photovoltaic module icons 511 to visually identify that an event occurs in a photovoltaic module corresponding to the photovoltaic module icon 511e. As described above, the user may intuitively identify information regarding an occurrence time of an event, how long the event is maintained (in the case of FIG. 4A), how often the event occurs, particularly, a photovoltaic module in which the event occurs.

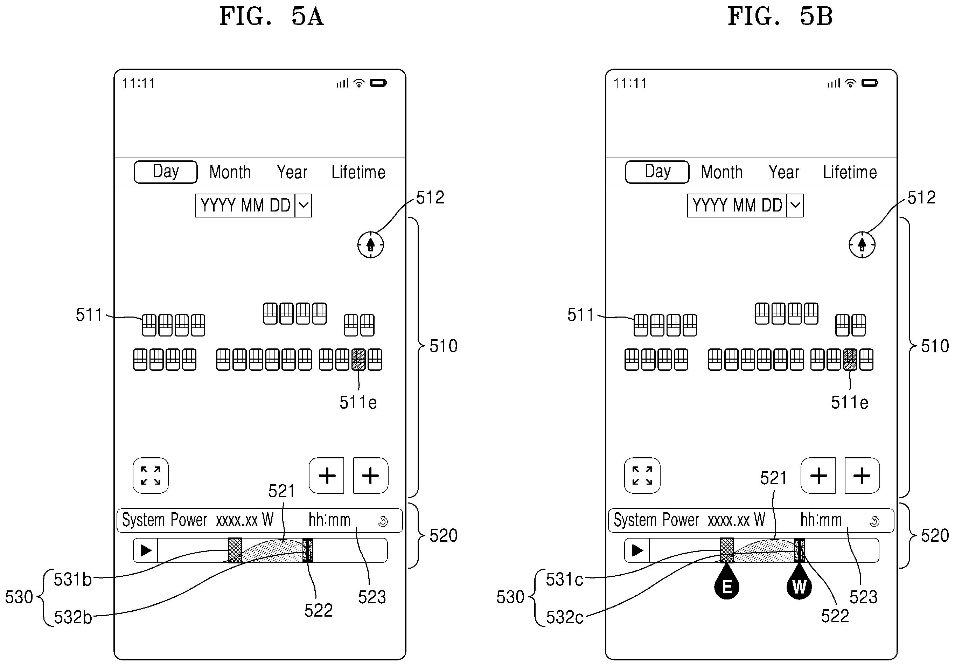

FIGS. 5A and 5B illustrate examples of a screen on which an event marker is displayed on a timeline interface, according to an embodiment.

When determining, in operation S103, whether or not the event occurs, the processor 120 may determine a type of event together. In an embodiment, the type of event may be distinguished through a maximum power generation amount for a certain time according to the number of photovoltaic modules. For example, in the case where a maximum power generation amount of a single photovoltaic module for a certain time is less than or equal to a reference value (e.g., 0 kWh), the processor 120 may determine that a first type of event occurs. In the case where a maximum power generation amount of two or more photovoltaic modules for a certain time is less than or equal to the reference value, the processor 120 may determine that a second type of event occurs. In the case where a maximum power generation amount of half of photovoltaic modules in a photovoltaic module array for a certain time is less than or equal to the reference value, the processor 120 may determine that a third type of event occurs. In a selective embodiment, the type of event may be distinguished by considering a maximum power generation amount of a photovoltaic module for a certain time and a temperature of the photovoltaic module together. For example, the processor 120 may determine that the first type of event (off due to overheating) occurs in the case where a maximum power generation amount of half of the photovoltaic modules in the photovoltaic module array for a certain time is less than or equal to the reference value and the temperature remains above a reference temperature and may determine that the second type of event occurs in the case where the maximum power generation amount of half of the photovoltaic modules in the photovoltaic module array for a certain time is less than or equal to the reference value and the temperature remains below the reference temperature. The type and distinguishment criterion of event are not limited to those described above and may be applied in various ways.

The processor 120 may distinguishably display event markers according to different types of events that are distinguished. Referring to FIGS. 5A and 5B, second event markers 532b and 532c may be expressed in different methods from first event markers 531b and 531c. A first event and a second event may be identified as different types by event markers displayed in two different methods. As illustrated in FIG. 5A, colors, shapes, hatchings, and the like of event markers may be displayed differently, and as illustrated in FIG. 5B, event markers may be differently displayed by adding identifiers thereto, but are examples.

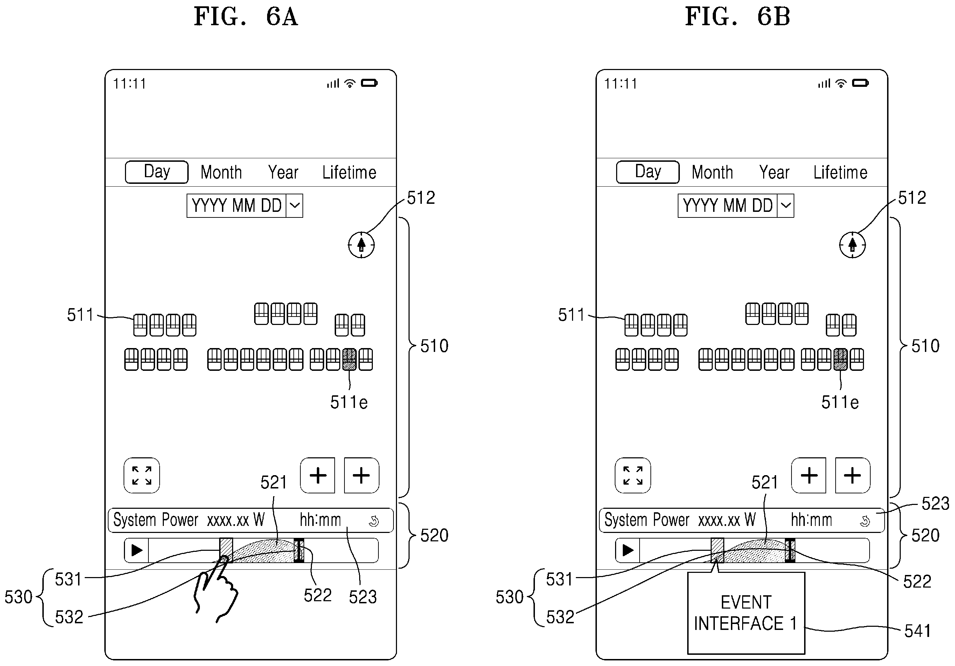

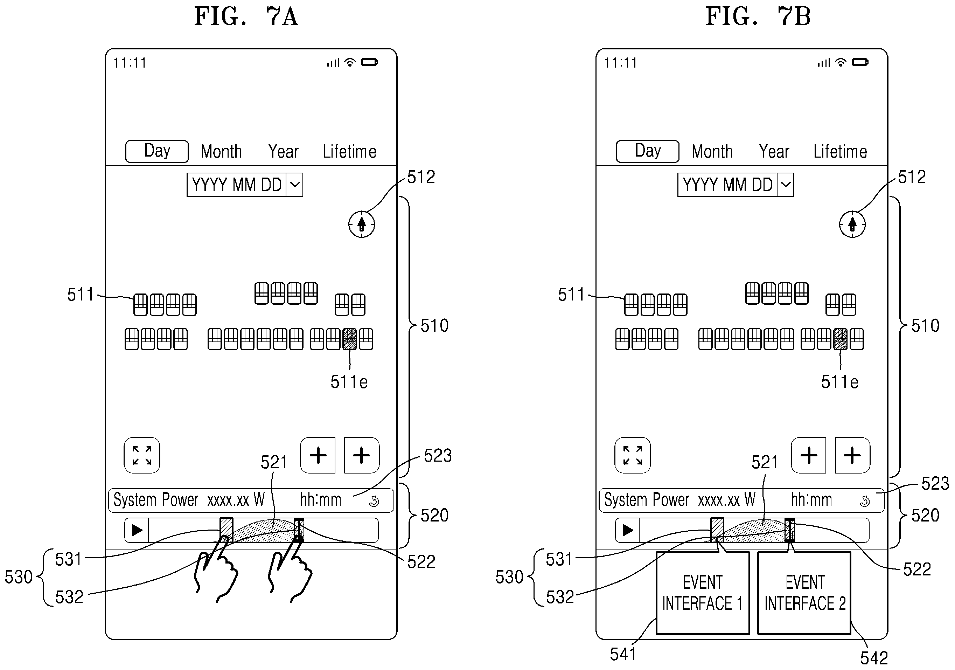

FIGS. 6A, 6B, 7A, and 7B illustrate examples of a screen on which an event interface is displayed through an event marker.

When a selection from a user is input, the processor 120 may generate and display an event interface 541 corresponding to a selected event marker 531. The event interface 541 may be a user interactive interface on which information related to an event is displayed. Event information may include a type of event, code, an event start time, an event termination time (resolution) time, identification information of an object (a photovoltaic module) in which an event occurs, trouble shooting related to the event, and the like. The event interface 541 may be displayed on a timeline interface 520 to be adjacent to the selected event marker 531.

Referring to FIGS. 6A and 6B, in response to a user input for selecting one event marker as illustrated in FIG. 6A, the processor 120 may generate and display one event interface 541 corresponding to the selected event marker 531 as illustrated in FIG. 6B. In addition, referring to FIGS. 7A and 7B, in response to a user input for selecting a plurality of event markers sequentially or simultaneously as illustrated in FIG. 7A, the processor 120 may generate and display event interfaces 541 and 542 respectively corresponding to selected event markers 531 and 532 as illustrated in FIG. 7B. Portions of a plurality of generated event interfaces may overlap each other and be displayed, such as the first event interface 541 and the second event interface 542 illustrated in FIG. 7B.

FIGS. 8A and 8B illustrate examples of a screen on which an additional operation is performed in an event interface.

The processor 120 may perform, on an event interface 541, an additional operation linked to trouble shooting according to a command from the user. Information related to the trouble shooting on the event interface 541 may be displayed as an icon or button to which a link is connected, and the additional operation linked may be performed by a selection from the user. The additional operation may be implemented through a separate pop-up page 550. In an embodiment, the additional operation may include an operation of immediately connecting to a service center, such as a phone call connection to the service center, an e-mail to the service center, a connection to an artificial intelligence (AI) chatbot of the service center, or a connection to a website of the service center. In a selective embodiment, the additional operation may include an operation of connecting to a manual that provides a detailed description and solution method of an event. In a selective embodiment, the additional operation may include an operation of transmitting a notification to the service center or transmitting a notification to a manager.

Referring to FIGS. 8A and 8B, when the user searches for trouble shooting from among event information by using a scroll bar of the event interface 541 and selects the same as illustrated in FIG. 8A, the processor 120 may perform the additional operation through the new pop-up page 550 as illustrated in FIG. 8B. Accordingly, an event occurring in a photovoltaic module may be easily identified, and user convenience may be increased by providing a one-stop method for resolving the event.

FIG. 9 is a flowchart illustrating a method of displaying monitoring data regarding a photovoltaic module, according to an embodiment.

Referring to FIG. 9, in operation S201, the processor 120 may receive monitoring data from a photovoltaic module array and store the received monitoring data. Operation S201 may be similar to operation S101 of FIG. 3 described above, and thus, the same description thereof is omitted.

In operation S202, the processor 120 may generate, on the basis of on the stored monitoring data, a photovoltaic module array layout drawing that displays individual monitoring information over time on photovoltaic module icons respectively corresponding to photovoltaic modules. In detail, the processor 120 may generate, on the basis of the stored monitoring data, a timeline interface that displays a comprehensive monitoring value that is comprehensive monitoring information of a photovoltaic module array over time and the photovoltaic module array layout drawing that displays, on a photovoltaic module icon corresponding to each individual photovoltaic module, an individual monitoring value, which is individual monitoring information, synchronously with a time of the timeline interface. Operation S202 may also be similar to operation S102 of FIG. 3 described above, and thus, the same description thereof is omitted.

In operation S203, the processor 120 may receive, as an input, a multi-selection for selecting at least two photovoltaic modules according to a command from a user on the photovoltaic module array layout drawing.

The input of the multi-selection may refer to a method of selecting two or more photovoltaic module icons on the photovoltaic module array layout drawing. The input of the multi-selection may be performed by a method of selecting at least two photovoltaic module icons through a drag operation or a method of selecting at least two photovoltaic module icons together with a function key (e.g., ctrl key, shift key, or the like).

In operation S204, the processor 120 may generate and display a multi-selection interface for comparing and displaying monitoring information regarding at least two photovoltaic modules selected by the input multi-selection.

The multi-selection interface may be a user interactive interface on which monitoring information regarding selected at least two photovoltaic modules is compared and displayed. The monitoring information may be a voltage, a current, an upper surface temperature, a lower surface temperature, a middle portion temperature, a power generation amount, and the like of an individual photovoltaic module over time. The monitoring information may be displayed as a graph having time as an x-axis. The multi-selection interface may include a selection bar that may be moved to the left and right of the x-axis along an axis of time and may move the selection bar by an input from a user. The multi-selection interface may be expressed so that monitoring information graphs of two or more photovoltaic modules overlap each other and be easily compared with each other, on the basis of axes of time and monitoring values. The multi-selection interface may include the photovoltaic module array layout drawing that displays a photovoltaic module icon corresponding to a selected photovoltaic module, and thus may display together a selected photovoltaic module.

In the case where a manager may view only monitoring information regarding a single photovoltaic module when monitoring the single photovoltaic module through a monitoring apparatus, the manager may not easily compare monitoring information between other photovoltaic modules. According to an embodiment, monitoring information regarding two or more photovoltaic modules may be easily compared with each other by a multi-selection to help improvement of service quality. For example, when comparing power generation amounts of two or more photovoltaic modules, a power generation amount of the photovoltaic module installed on a particular roof portion may be determined to be consistently lower than a power generation amount of the other photovoltaic module, and accordingly, power generation efficiency may be maximized by adjusting the degree of tilt or azimuth of the photovoltaic module installed on the particular roof portion.

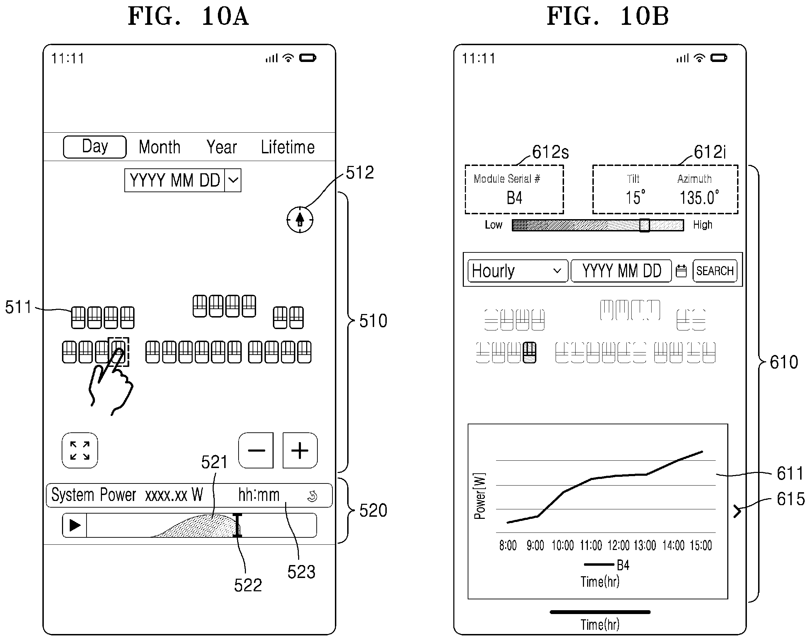

FIGS. 10A and 10B illustrate examples of a screen that displays a single selection interface by a single selection. FIG. 10A illustrates that a photovoltaic module array layout drawing 510 and a timeline interface 520 are displayed adjacent to each other on a screen. As illustrated in FIG. 10A, the timeline interface 520 may represent, as a graph 521, a comprehensive power generation amount (system power) of the photovoltaic module array over time on a particular date (YYYYMMDD), and a user may identify a comprehensive power generation amount (system power) at a selected time point 523 by moving a selection bar 522 to the left and right of the screen. The photovoltaic module array layout drawing 510 may display an azimuth identifier 512 that displays azimuth information and may display photovoltaic module icons 511 to match an arrangement of actual photovoltaic modules. As illustrated in FIG. 10A, the photovoltaic module array layout drawing 510 may display a state of an actual photovoltaic module array at the time point 523 selected by the user. Identification numbers and individual monitoring values (maximum power generation amounts) may be displayed on the respective photovoltaic module icons 511. When the selection bar 522 is located at a certain location of the timeline interface 520, individual monitoring values of respective photovoltaic modules may be displayed in numbers on the respective photovoltaic module icons 511 in the photovoltaic module array layout drawing 510.

When one photovoltaic module icon 511 is touched (tabbed) on the photovoltaic module array layout drawing 510 as illustrated in FIG. 10A, the processor 120 may generate and display a single selection interface 610 that displays monitoring information regarding a photovoltaic module corresponding to the selected photovoltaic module icon 511, as illustrated in FIG. 10B. The processor 120 may display, on the single selection interface 610, identification information 612s of an actual photovoltaic module corresponding to the selected photovoltaic module icon 511, installation information 612i including the degree of tilt and azimuth, and the like. In addition, the processor 120 may display, on the single selection interface 610, individual monitoring information regarding the actual photovoltaic module corresponding to the selected photovoltaic module icon 511. FIG. 10B illustrates only a power generation amount of the selected photovoltaic module over time as a graph 611 on a certain date (YYYYMMDD), and when the screen is turned 615, a voltage, current, temperature, and the like of an individual photovoltaic module over time may be identified in addition to the power generation amount.

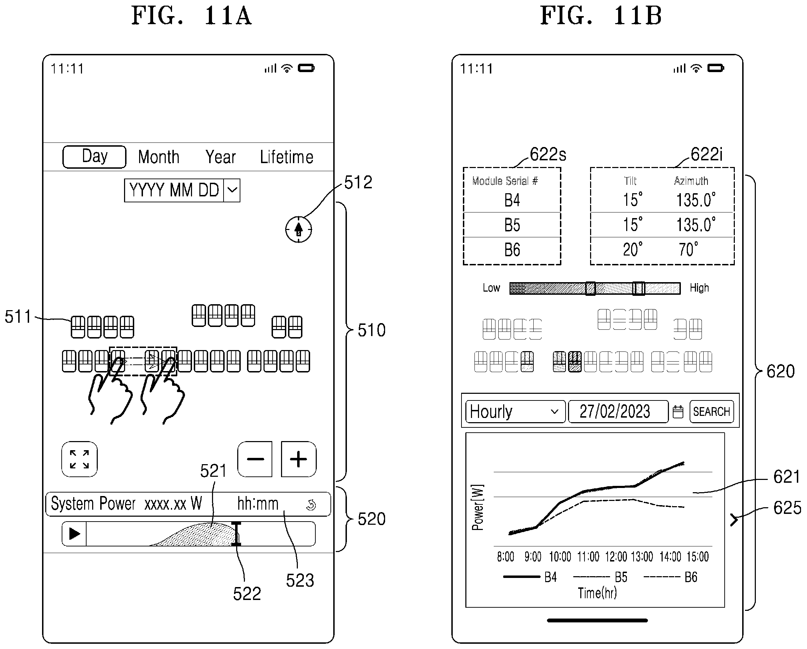

FIGS. 11A and 11B illustrate examples of a screen that displays a multi-selection interface by a multi-selection.

Unlike the illustrations in FIGS. 10A and 10B, FIGS. 11A and 11B illustrate that an input from a user is not a single selection but a multi-selection. The other descriptions of FIGS. 11A and 11B are the same as the descriptions of FIGS. 10A and 10B, and thus, the same descriptions are omitted.

When at least two photovoltaic module icons 511 (three in FIG. 11A) are dragged on a photovoltaic module array layout drawing 510 as illustrated in FIG. 11A, the processor 120 may generate and display a multi-selection interface 620 that displays monitoring information regarding photovoltaic modules corresponding to the selected three photovoltaic module icons 511, as illustrated in FIG. 11B. The processor 120 may display, on the multi-selection interface 620, identification information 622s of actual photovoltaic modules respectively corresponding to the selected photovoltaic module icons 511, installation information 622i including the degree of tilt and azimuth, and the like. In addition, the processor 120 may compare and display, on the multi-selection interface 620, monitoring information regarding the actual photovoltaic modules corresponding to the selected photovoltaic module icons 511. FIG. 11B illustrates that graphs of power generation amounts of selected three photovoltaic modules over time on a certain date (YYYYMMDD) overlap one another and are displayed as one graph 621. Here, when a screen is turned 625, in addition to the power generation amounts, compared voltages, currents, temperatures, and the like of the three photovoltaic modules over time may be identified.

FIG. 11B illustrates that three photovoltaic modules corresponding to identification information B4, B5, and B6 are selected, and from among the selected three photovoltaic modules, the power generation amount of the photovoltaic module corresponding to the identification information B6 is identified on the multi-selection interface 620 to be lower than the power generation amounts of the other two photovoltaic modules. On the basis of the same, a user (or an installer) may maximize power generation efficiency by adjusting the degree of tilt or azimuth of the photovoltaic module corresponding to the identification information B6.

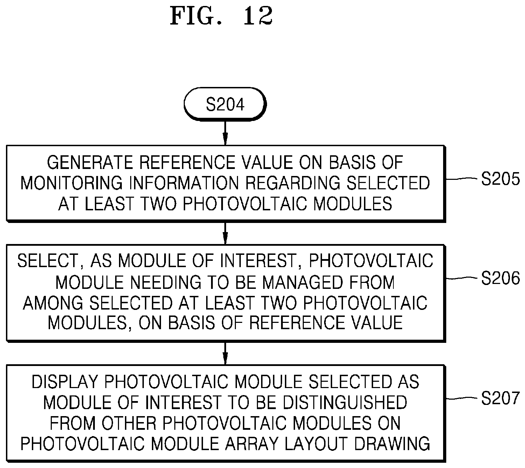

FIG. 12 is a flowchart illustrating a method of displaying monitoring data regarding a photovoltaic module, according to an embodiment.

In operation S205 following operation S204, the processor 120 may generate a reference value on the basis of monitoring information regarding selected at least two photovoltaic modules.

When the at least two photovoltaic modules are selected, the processor 120 may generate the reference value on the basis of stored monitoring information regarding each of the at least two photovoltaic modules. The reference value may be a reference value for selecting a photovoltaic module that needs to be managed, may be, for example, an average value excluding the lowest value from among power generation amounts of selected two or more photovoltaic modules, or may be a value designated by a user without being limited thereto.

In operation S206, the processor 120 may select, as a module of interest, a photovoltaic module needing to be managed from among the selected at least two photovoltaic modules, on the basis of the reference value.

The processor 120 may select at least one photovoltaic module by comparing monitoring information regarding the selected two or more photovoltaic modules with the reference value. The module of interest may refer to a photovoltaic module of which degree of tilt or azimuth need to be adjusted to increase power generation efficiency, in which a foreign material needs to be removed from a panel, or which needs a particular measure. For example, the processor 120 may select, as the module of interest, a photovoltaic module of which power generation amount for a certain time is consistently less (lower) than the reference value.

In a selective embodiment, the processor 120 may also determine whether or not the selection is terminated (resolved). The processor 120 may determine whether or not the selection is terminated (resolved) as a user or a manger receives an input for identifying that management is completed by adjusting the degree of tilt and azimuth of the photovoltaic module selected as the module of interest, removing the foreign material from the panel, or through the particular measure.

In operation S207, the processor 120 may display the photovoltaic module selected as the module of interest in a method of being distinguished from the other photovoltaic modules on a photovoltaic module array layout drawing.

The processor 120 may display a photovoltaic module icon corresponding to the photovoltaic module selected as the module of interest, in at least one of different color, brightness, darkness, and border line expression methods from other photovoltaic module icons. Accordingly, the user (or the manager) may intuitively identify a photovoltaic module that needs to be managed.

The processor 120 may display the photovoltaic module icon corresponding to the module of interest in the distinguished method from a point in time at which the photovoltaic module is selected as the module of interest to a point in time at which the selection is terminated (resolved).

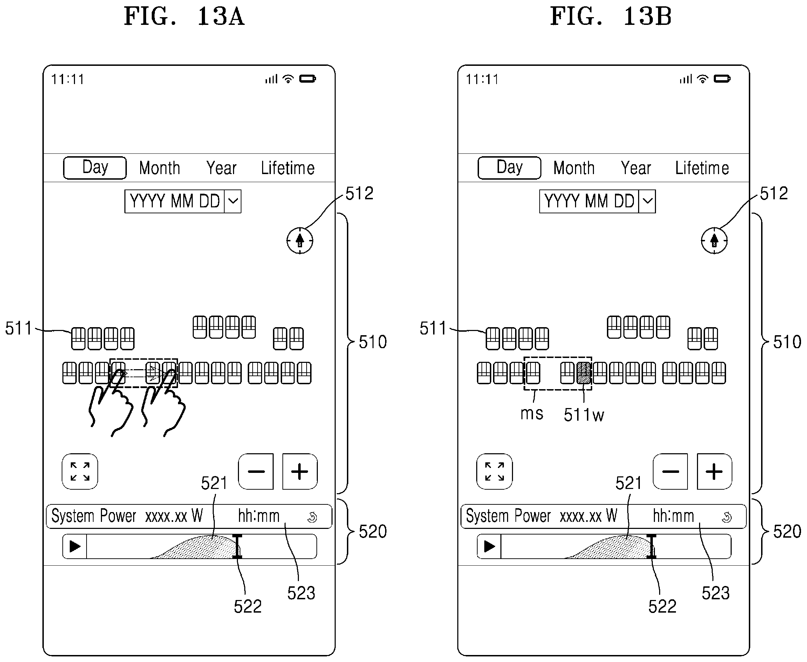

FIGS. 13A and 13B illustrate examples of a screen that displays a module of interest selected by a multi-selection, according to an embodiment.

Unlike the illustrations in FIGS. 11A and 11B, FIGS. 13A and 13B illustrate examples of a screen after the multi-selection interface 620 of FIG. 11B is generated and displayed, when a multi-selection is input. Therefore, an operation in FIG. 13A is the same as an operation in FIG. 11A, and thus, the same description thereof is omitted. An operation in FIG. 13B illustrates a screen displayed after returning to a photovoltaic module array layout drawing 510 in response to an input from a user after the operation in FIG. 11B.

When a multi-selection is made by dragging three photovoltaic module icons 511 on the photovoltaic module array layout drawing 510 as illustrated in FIG. 13A, one photovoltaic module icon 511w corresponding to one photovoltaic module selected as a module of interest may be displayed to be distinguished from other photovoltaic module icons 511, as illustrated in FIG. 13B. The processor 120 may distinguishably display a photovoltaic module icon corresponding to the photovoltaic module selected as the module of interest and simultaneously display information regarding multi-selected photovoltaic module icons together. In other words, as illustrated in FIG. 13B, multi-selected photovoltaic module icons may be displayed together by using an expression such as a dotted box ms.

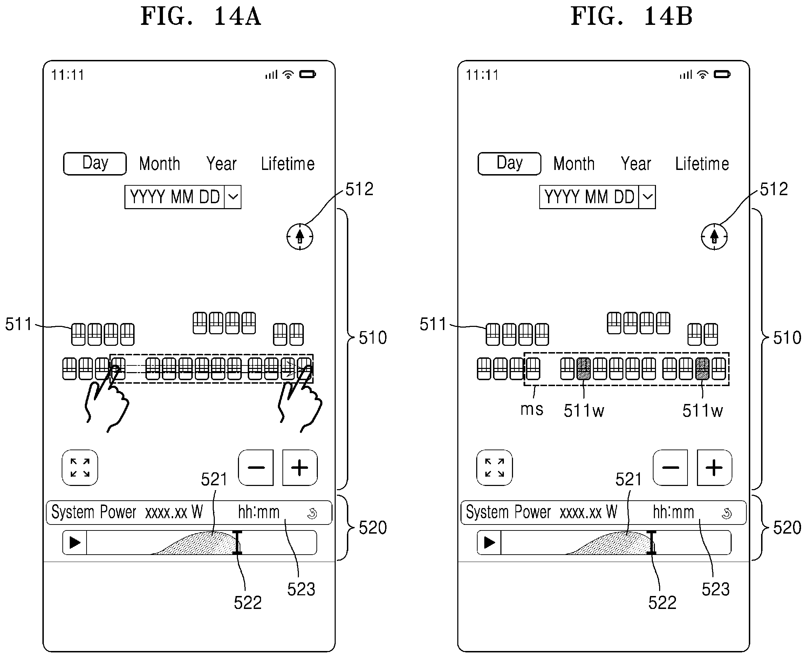

FIGS. 14A and 14B illustrate other examples of a screen that displays a module of interest selected by a multi-selection, according to an embodiment.

Unlike the illustrations in FIGS. 13A and 13B, FIGS. 14A and 14B illustrate examples in which one or more modules of interest are selected. The other descriptions of FIGS. 14A and 14B are the same as the descriptions of FIGS. 13A and 13B, and thus, the same descriptions are omitted.

The processor 120 may select one or more modules of interest from among a plurality of multi-selected photovoltaic module icons 511.

When a multi-selection is made by dragging eleven photovoltaic module icons 511 on a photovoltaic module array layout drawing 510 as illustrated in FIG. 14A, two photovoltaic module icons 511w corresponding to two photovoltaic modules selected as modules of interest may be displayed to be distinguished from other photovoltaic module icons 511, as illustrated in FIG. 14B. Similar to the illustrations in FIGS. 13A and 13B, the processor 120 may distinguishably display photovoltaic module icons corresponding to photovoltaic modules selected as modules of interest and simultaneously display information regarding multi-selected photovoltaic module icons together. In other words, as illustrated in FIG. 14B, multi-selected photovoltaic module icons may be displayed together in an expression such as a dotted box ms.

As described above, by displaying modules of interest according to a multi-selection, a user (or a manager) may intuitively and easily identify a photovoltaic module that needs to be managed, by comparing the modules of interest with other photovoltaic modules and thus may easily maintain a solar facility system.

A monitoring apparatus described above may have a form that is implemented as an application, and installed and executed on a user terminal or a form that is mounted on a server system, and accessed and executed by the user terminal through a web service, but is not limited thereto. In the former case, a user may use a monitoring function by downloading and executing a monitoring application on the user terminal, and in the latter case, the user may use the monitoring function by accessing a website hosted by a server.

The above description of the disclosure is for illustrative purposes only, and one of ordinary skill in the art to which the disclosure pertains may understand that the description may be easily modified into other particular forms without changing the spirit or essential features of the disclosure. Therefore, the embodiments described above should be understood in all respects as illustrative and not restrictive. For example, each component described as a single type may be implemented in a distributed manner, and similarly, components described as distributed may also be implemented in a combined form.

The operations constituting the method according to the disclosure may be performed in any appropriate order unless an order of the operations is explicitly stated or stated to the contrary. The disclosure is not necessarily limited according to the order of description of the operations. The use of all examples or example terms (e.g., and the like) in the disclosure is simply to describe the disclosure in detail, and the scope of the disclosure is limited due to the examples or example terms unless limited by claims. In addition, one of ordinary skill in the art may appreciate that various modifications, combinations, and changes may be made according to design conditions and factors within appended claims or the scope of equivalents thereof.

Therefore, the spirit of the disclosure should not be determined while limited to the embodiments described above, and all scopes equivalent to or equivalently changed from claims as well as claims described below should fall within the scope of the spirit of the disclosure.

### Industrial Applicability

The present disclosure may be utilized in the solar power generation industry and the energy industry.

## Claims

1. A method of displaying monitoring data regarding a photovoltaic module on a monitoring apparatus comprising a processor and configured to communicate with the photovoltaic module, the method comprising:
receiving monitoring data from a photovoltaic module array comprising a plurality of photovoltaic modules and storing the received monitoring data;
on the basis of the stored monitoring data, generating a timeline interface displaying comprehensive monitoring information regarding the photovoltaic module array over time and a photovoltaic module array layout drawing comprising a plurality of photovoltaic module icons displaying monitoring information by respectively corresponding to the photovoltaic modules, synchronously with a time of the timeline interface and outputting the generated timeline interface and photovoltaic module array layout drawing to a user terminal;
determining, on the basis of the stored monitoring data, whether or not an event occurs in each of the photovoltaic modules;
in a case where the event occurs as a result of the determination, displaying, on the photovoltaic module array layout drawing, a photovoltaic module icon corresponding to a photovoltaic module in which the event occurs in a method of being distinguished from the other photovoltaic module icons; and
displaying an event marker on the timeline interface by synchronizing with displaying the photovoltaic module icon associated with the event in the distinguished method.

2. The method of claim 1, wherein whether or not the event occurs is determined on the basis of a maximum power generation amount of the photovoltaic module for a certain time.

3. The method of claim 1, wherein the photovoltaic module icon corresponding to the photovoltaic module in which the event occurs is displayed on the photovoltaic module array layout drawing by using at least one of different color, brightness, darkness, and border line expression methods from the other photovoltaic module icons.

4. The method of claim 1, wherein the event marker is displayed from a point in time at which the event occurs to a point in time at which the event is terminated.

5. The method of claim 1, wherein the determining of whether or not the event occurs further comprises determining a type of event, and the event marker is distinguishably displayed according to different types of events.

6. The method of claim 1, wherein the photovoltaic module array layout drawing corresponds to a layout of an actually installed photovoltaic module array.

7. An apparatus comprising:
at least one processor 120; and
at least one memory 110, wherein the at least one processor 120 is configured to: receive monitoring data from a photovoltaic module array comprising a plurality of photovoltaic modules and store the received monitoring data in the at least one memory; on the basis of the stored monitoring data, generate a timeline interface displaying comprehensive monitoring information regarding the photovoltaic module array over time and a photovoltaic module array layout drawing comprising a plurality of photovoltaic module icons displaying monitoring information by respectively corresponding to the photovoltaic modules, synchronously with a time of the timeline interface and output the generated timeline interface and photovoltaic module array layout drawing to a user terminal; determine, on the basis of the stored monitoring data, whether or not an event occurs in each of the photovoltaic modules; in a case where the event occurs as a result of the determination, display, on the photovoltaic module array layout drawing, a photovoltaic module icon corresponding to a photovoltaic module in which the event occurs in a method of being distinguished from the other photovoltaic module icons; and display an event marker on the timeline interface by synchronizing with displaying the photovoltaic module icon associated with the event in the distinguished method.

8. The apparatus of claim 7, wherein the at least one processor 120 is further configured to determine whether or not the event occurs, on the basis of a maximum power generation amount of the photovoltaic module for a certain time.

9. The apparatus of claim 7, wherein the at least one processor 120 is further configured to display, on the photovoltaic module array layout drawing, the photovoltaic module icon corresponding to the photovoltaic module in which the event occurs by using at least one of different color, brightness, darkness, and border line expression methods from the other photovoltaic module icons.

10. The apparatus of claim 7, wherein the at least one processor 120 is further configured to display the event marker from a point in time at which the event occurs to a point in time at which the event is terminated.

11. The apparatus of claim 7, wherein the at least one processor 120 is further configured to:
determine a type of event; and
distinguishably display the event marker according to different types of events.

12. The apparatus of claim 7, wherein the photovoltaic module array layout drawing corresponds to a layout of an actually installed photovoltaic module array.

13. An apparatus comprising:
at least one processor 120; and
at least one memory 110, wherein the at least one processor 120 is configured to: receive monitoring data from a photovoltaic module array comprising a plurality of photovoltaic modules and store the received monitoring data in the at least one memory; on the basis of the stored monitoring data, generate a photovoltaic module array layout drawing comprising a plurality of photovoltaic module icons displaying monitoring information over time by respectively corresponding to the photovoltaic modules and output the generated photovoltaic module array layout drawing to a user terminal; receive, as an input, a multi-selection selecting at least two photovoltaic modules according to a command from a user on the photovoltaic module array layout drawing; and generate and display a multi-selection interface that compares and displays monitoring information regarding at least two photovoltaic modules selected by the input multi-selection.

14. The apparatus of claim 13, wherein the multi-selection interface overlaps and displays respective graphs displaying power generation amounts of the photovoltaic modules over time.

15. The apparatus of claim 13, wherein the at least one processor 120 is further configured to:
generate a reference value on the basis of the monitoring information regarding the selected at least two photovoltaic modules;
select, as a module of interest, a photovoltaic module needing to be managed from among the selected at least two photovoltaic modules, on the basis of the reference value; and
display the photovoltaic module selected as the module of interest in a method of being distinguished from the other photovoltaic modules on the photovoltaic array layout drawing.
